# EUROPÄISCHE PATENTANMELDUNG

(11) **EP 0 601 443 A1**
(43) Veröffentlichungstag der Anmeldung: **15.06.1994**
(21) Anmeldenummer: 93119278.5
(22) Anmeldetag: 30.11.1993
(51) Int. Cl.: F24J 2/46, F24J 2/26

(54) **Sonnenkollektor mit innenliegenden Verteilerleitungen**

(30) Priorität: 10.12.1992 DE 4241687
(71) Anmelder: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(57) **Zusammenfassung**

Bei einem Sonnenkollektor mit einem Gehäuse 12, in dem wenigstens eine Absorberleitung 14 aufgenommen ist, die an ihren beiden Enden mit zwei, durch Öffnungen durch das Gehäuse geführten Verteilerleitungen 20, 22 aus duktilem Material verbunden ist, wobei die Verteilerleitungen im Innern des Gehäuses jeweils im wesentlichen parallel zu zwei einander gegenüberliegenden Seitenwänden verlaufen, und die Absorberleitung und die beiden Verteilerleitungen sich im wesentlichen parallel zu der Sonneneinfallsfläche des Sonnenkollektors erstrecken und in wärmeleitender Verbindung mit einem die Sonneneinfallsfläche des Sonnenkollektors im wesentlichen überdeckenden Solarabsorber 50 stehen, wird die Wärmedehnung der Verteilerleitungen in dem Sonnenkollektor auf einfache Weise dadurch kompensiert, daß die Verteilerleitungen gegenüber der Absorberleitung zur Bodenfläche des Gehäuses hin versetzt sind und die Verteilerleitungen wenigstens einen Krümmungsbereich aufweisen, in dem die Verteilerleitungen, 20, 22 bezogen auf die jeweilige Mittelachse der Verteilerleitungen außerhalb des Krümmungsbereiches, in eine erste Richtung und dann in eine dazu entgegengesetzte Richtung gebogen sind.

## Beschreibung

Die Erfindung betrifft einen Sonnenkollektor mit den Merkmalen des Oberbegriffs des Anspruchs 1. Ein derartiger Sonnenkollektor ist aus der US Patentschrift 42 52 103 bekannt.

Solche Sonnenkollektoren können einzeln verwendet werden, sie sind jedoch häufig neben- oder übereinander in Reihen zu einem größeren Kollektorfeld einer Solaranlage zusammengefaßt. Solaranlagen dieser Art sind in der Lage, große Mengen an Warmwasser bereitzustellen, beispielsweise für ein Schwimmbad oder einen Hotelkomplex.

Jeder einzelne Sonnenkollektor in einem Kollektorfeld weist eine Zu- und Ableitung für das ihn durchströmende Wärmeträgermedium auf, die an je eine Verteilerleitung angeschlossen ist, d.h. jeder Reihe eines Kollektorfeldes ist eine Verteilerleitung zugeordnet, von der die Zuleitungen der einzelnen Sonnenkollektoren abzweigen, und eine andere Verteilerleitung, in die die Ableitungen münden. Die Verteilerleitungen sind fast immer aus einem metallischen Werkstoff, üblicherweise aus Kupfer, hergestellt. Verteilerleitungen aus Kunststoff konnten sich bisher wegen des hohen Preises oder der fehlenden Temperaturbeständigkeit und Dauerhaltbarkeit nicht durchsetzen.

Die Verteilerleitungen, die das Kollektorfeld mit einem Warmwasserspeicher verbinden, sind erheblichen Temperaturunterschieden ausgesetzt. So kann das von der Sonne aufgeheizte Wärmeträgermedium die Verteilerleitungen tagsüber auf mehr als 70°C erhitzen, während in kalten Winternächten Temperaturen bis zu etwa 30°C unter Null auftreten können. Noch größer wird der mögliche Temperaturunterschied, wenn eine das Wärmeträgermedium umwälzende Pumpe z.B. bei Stromausfall nicht mehr arbeitet. Bei fortdauernder Sonneneinstrahlung kann sich dann das Wärmeträgermedium im Sonnenkollektor auf über 200°C erhitzen, wobei sich diese Temperatur ohne wesentliche Abkühlung auch auf die nahegelegenen Verteilerleitungen überträgt.

Bei der Konzeption einer Solaranlage muß also davon ausgegangen werden, daß die Differenz zwischen Minimal- und Maximaltemperatur in den Verteilerleitungen ungefähr 230°C beträgt. Je länger eine einzelne Kollektorreihe in einer Solaranlage ist und je länger infolgedessen die Verteilerleitungen sind, desto bedeutsamer wird das Problem der Längenänderung der Verteilerleitungen aufgrund unterschiedlicher Temperaturen. Legt man eine Verteilerleitung aus Kupfer mit einer bei größeren Solaranlagen durchaus üblichen Länge von 50 Metern zugrunde, so muß bei einer Wärmeausdehnung von 1,7 mm pro Meter und 100°C für Kupfer mit einer maximal möglichen Längenänderung von 200 mm gerechnet werden. Die heute verfügbaren Hartkunststoffe, die als Material für Verteilerleitungen einsetzbar wären, weisen häufig eine noch höhere Wärmedehnung auf. Ohne einen Dehnungsausgleich würden insbesondere an den Kollektoren, bei denen sich die Längenänderung der Verteilerleitung ihrem Maximalbetrag nähert, die in das Gehäuse geführten Zu- und Ableitungen gegen den Rand ihrer Öffnungen gedrückt und abgeknickt werden.

Es ist bekannt, zur Lösung dieses Problems Dehnungskompensatoren, beispielsweise in Balgform, in die Verteilerleitungen etwa nach jedem siebten Kollektor einzusetzen. Da Dehnungskompensatoren sich jedoch schon bei wechselndem Druck in den Verteilerleitungen, wie er durch wechselnde Temperaturen hervorgerufen wird, ausdehnen würden, müssen Dehnungskompensatoren enthaltende Verteilerleitungen an mindestens zwei Stellen - meist am Anfang und Ende einer Kollektorreihe - befestigt werden. Auf einem Ziegeldach ist die erforderliche Befestigung nur schwer und mit hohem Aufwand durchzuführen, wobei zusätzlich der optische Gesamteindruck verschlechtert wird. Hinzu kommt, daß separate Dehnungskompensatoren teure Bauteile sind und daher den Preis für eine komplette Solaranlage in die Höhe treiben.

Es ist auch möglich, statt der Zu- und Ableitungen aus duktilem Material flexible Schläuche aus Metall oder einem geeigneten Kunststoff zu verwenden. Diese Lösung ist jedoch ebenfalls sehr teuer.

Selbst bei kleineren Solaranlagen, die noch ohne Dehnungskompensatoren auskommen, führt die auf die temperaturbedingte Längenänderung der Verteilerleitungen zurückgehende ständige Biegewechselbeanspruchung im Bereich der Zu- und Ableitungen, d.h. von der Verteilerleitung bis hinein in das Kollektorgehäuse, nach längerer Betriebszeit zum Versagen infolge von Leitungsbruch.

In der vorangemeldeten, nachveröffentlichten Patentanmeldung P 41 37 342 des Anmelders ist ein Sonnenkollektor beschrieben, der durch außenliegende Verteilerleitungen gespeist wurde. Dabei ist der Durchmesser der Öffnungen im Gehäuse, durch die die Zu- und Ableitungen geführt sind, in jedem Fall mehr als doppelt so groß wie der Durchmesser der Zu- und Ableitung selbst.

Weiterhin ist in dieser Patentanmeldung beschrieben, daß das Absorberrohr nicht wie üblich kurz nach dem Eintritt in das Kollektorgehäuse ortsfest fixiert ist, sondern daß nach dem Eintritt des Absorberrohres in das Gehäuse zumindest das Zehnfache des Absorberrohrdurchmessers fixierungsfrei ist.

Außerdem ist in dieser Patentanmeldung beschrieben, daß die aus (dehn- und formbarem) duktilem Material bestehenden Zu- und Ableitungen nicht wie üblich im wesentlichen gerade ausgeführt sind, sondern zumindest einen Bogen aufweisen. Dieser zumindest eine Bogen kann die durch Temperaturunterschiede hervorgerufene Längenänderung der angeschlossenen Verteilerleitung besser aufnehmen, ohne daß die Verbindungsstellen zwischen Zu- und Ableitungen und Verteilerleitung bzw. Zu- oder Ableitung und Absorberrohr über Gebühr belastet werden. Je nach dem Betrag der zu erwartenden Längenänderung können auch mehrere Bögen in den Zu- und Ableitungen vorgesehen sein, was deren Dehnungsausgleichsfähigkeit verbessert.

Bei Sonnenkollektoren mit innenliegenden Verteilerleitungen sind die Verteilerleitungen jeweils durch Öffnungen geführt, die in zwei einander gegenüberliegenden Wänden des Gehäuses jeweils in der Nähe der Eckbereiche vorgesehen sind. Dort werden sie entweder mit einer Sammelleitung oder mit dem nächsten bzw. vorangehenden Kollektor verbunden.

Üblicherweise haben die Verteilerleitungen einen größeren Durchmesser als die Absorberrohre. Die Sole fließt an einer Seite in das Verteilerrohr ein, durchströmt die Kanäle des Absorbers nach oben und fließt an dem oberen Verteilerrohr wieder aus dem Sonnenkollektor heraus zum nächsten Kollektor oder zum Wärmetauscher.

Diese Anordnung hat eine Reihe von Problemen. Da üblicherweise mehrere Sonnenkollektoren hintereinander in Reihe geschaltet sind und bei einer Temperaturdifferenz von etwa 250° die Wärmedehnung von Kupferrohren etwa 4 mm pro Meter ausmacht, müßte entweder in jedem einzelnen Sonnenkollektor oder jeweils zwischen zwei Sonnenkollektoren ein Dehnungsbalg vorgesehen sein, um die Wärmedehnungen aufnehmen zu können. Separat in den Fluidkreislauf eingefügte Dehnungskompensatoren rufen jedoch zusätzliche Probleme bei der Abdichtung auf und außerdem erhöhen sich die Herstellungskosten und der Montageaufwand.

Ausgehend hiervon ist es Aufgabe der vorliegenden Erfindung, den eingangs genannten Sonnenkollektor dahingehend zu verbessern, daß die Wärmedehnung der Verteilerleitungen in dem Sonnenkollektor auf einfache Weise kompensiert wird.

Zu diesem Zweck ist der eingangs genannte Sonnenkollektor durch die Merkmale des kennzeichnenden Teils des Anspruchs 1 weitergebildet.

Damit ist die Verteilerleitung im Innern des Kollektorgehäuses in einem Bogen geführt, der Wärmedehnungen der Verteilerleitungen aufzunehmen in der Lage ist. Je nach Länge des Verteilerrohrs im Innern des Kollektorgehäuses sind die beiden Biegungen im Krümmungsbereich mit einem entsprechend großen Biegeradius auszuführen. Auch der Durchmesser der Verteilerleitungen bzw. deren Material beeinflußt die Wahl des passenden Biegeradius.

Da der bzw. die Krümmungsbereiche einfach im Verlauf der Verteilerleitung im Innern des Kollektorgehäuses vorgesehen sein können, sind keine zusätzlichen Bauteile oder Leitungsübergänge erforderlich. Vielmehr können die Krümmungsbereiche bereits bei der Herstellung der Rohre eingearbeitet werden.

Bei einem bevorzugten Ausführungsbeispiel sind jeweils im Bereich einer Öffnung in der Wand des Kollektorgehäuses ein Krümmungsbereich vorgesehen. Zwischen den beiden Krümmungsbereichen in der Nähe der einander gegenüberliegenden Wände verlaufen die Verteilerleitungen im übrigen geradlinig und parallel zu den jeweils anderen Seitenwänden.

Mit Vorteil ist der erfindungsgemäße Sonnenkollektor dahingehend ausgestaltet, daß jeder Krümmungsbereich einen im wesentlichen quer zur Längsachse der Verteilerleitung verlaufenden Versatzbereich aufweist, der lang genug ist, um die Längenänderung der Verteilerleitung infolge von Temperaturänderungen insoweit aufzunehmen, als die Längenänderung nicht von anderen Krümmungsbereichen aufgenommen wird. Durch den Biegewechsel im Krümmungsbereich von einer Richtung zur anderen, entsteht ein etwa quer zur Längsachse der Verteilerleitung verlaufender Versatzbereich, der es gestattet, daß sich die Verteilerleitung in ihrer Länge nach ausdehnt, wobei sich dann die Winkelstellung des Versatzbereiches zur Längsachse der Verteilerleitung entsprechend ändert. Je nach Länge des Versatzbereiches sind unterschiedlich starke Biegungen des Versatzbereiches und damit Längenänderungen der Verteilerleitung infolge von Temperaturänderungen möglich. Dies bedeutet, daß bei starken Längenänderungen mehrere Krümmungsbereiche vorzusehen sind oder der Versatzbereich des Krümmungsbereiches entsprechend lang zu gestalten ist.

Insbesondere bei Gehäuseformen des Sonnenkollektors, bei denen der untere Teil der Seitenwände nach innen versetzt ist, um Platz für die Verbindung von zwei Rohrleitungen zwischen aneinander angrenzenden Sonnenkollektoren zu haben (siehe z.B. Deutsche Patentanmeldung 41 35 985), ist es vorteilhaft, wenn jeder Krümmungsbereich zwei Enden aufweist, wobei jeweils ein Ende gegenüber dem anderen Ende zur Bodenfläche des Gehäuses hin versetzt ist. Dann können die Verteilerleitungen in dem zurückversetzten Wandbereich nach außen treten, so daß zwischen zwei aufeinanderfolgenden Sonnenkollektoren genügend Platz für entsprechende Flanschverbindungen bleibt.

Bei einer bevorzugten Ausführungsform des Sonnenkollektors ist die wärmeleitende Verbindung zwischen der Absorberleitung und dem Solarabsorber durch eine an dem Solarabsorber einstückig angeformte Halteeinrichtung herstellbar, die die Absorberleitung zumindest teilweise formschlüssig umgreift. Damit kann die Absorberleitung an dem Solarabsorber auf einfache Weise befestigt werden.

In ähnlicher Weise kann die wärmeleitende Verbindung zwischen der Verteilerleitung und dem Solarabsorber durch eine an dem Solarabsorber einstückig angeformte Halteeinrichtung herstellbar sein, die die Verteilerleitung zumindest teilweise formschlüssig umgreift. Mit einer derartigen Ausgestaltung wird sichergestellt, daß die Verteilerleitung ebenfalls von dem Solarabsorber mit Wärmeenergie versorgt wird. Eine innenliegende Verteilerleitung mit größerem Rohrdurchmesser als die Absorberleitungen erhöht den Fluidinhalt des Sonnenkollektors. Auf diese Weise wird das Gesamtsystem träger, d.h. der Sonnenkollektor benötigt eine längere Zeit, um die Arbeitstemperaturen zu erreichen, da er ein höheres Fluidvolumen erhitzen muß. Dadurch, daß eine direkte Wärmeübertragung von dem Solarabsorber auf die jeweiligen Verteilerleitungen erfolgt, erfolgt eine gleichmäßigere und schnellere Erwärmung des Fluidinhalts des Rohrleitungssystems.

Da üblicherweise die Verteilerleitung einen größeren Außendurchmesser hat als die Absorberleitung, besteht zunächst nicht die Möglichkeit, den Solarabsorber mit Hilfe der Halteeinrichtung für die Absorberleitung auch an der Verteilerleitung thermisch anzukoppeln. Vielmehr ist es nach einem bevorzugten Ausführungsbeispiel der vorliegenden Erfindung vorteilhaft, daß die wärmeleitende Verbindung zwischen der Verteilerleitung und dem Solarabsorber durch eine an einer Halteeinrichtung für eine Absorberleitung befestigbare Halteeinrichtung herstellbar ist, die die Verteilerleitung zumindest teilweise formschlüssig umgreift.

Bei einer anderen Form ist die Anordnung derart getroffen, daß der Solarabsorber parallel zu den Verteilerleitungen in wenigstens drei aneinander angrenzende Bereiche geteilt ist, wobei der mittlere Bereich mit der Absorberleitung und die beiden äußeren Bereiche mit den jeweiligen Verteilerleitungen verbunden sind, und die mit den Verteilerleitungen verbundenen Bereiche gegenüber dem mit der Absorberleitung verbundenen Bereich geneigt sind.

Bei einem bevorzugten Ausführungsbeispiel sind die beiden Krümmungsbereiche so angeordnet und ausgerichtet, daß die Längsachse der Verteilerleitung in den, zwischen den Öffnungen in dem Gehäuse und den Krümmungsbereichen liegenden, Abschnitten in geringerem Abstand zum Boden des Gehäuses liegt als der zwischen den beiden Krümmungsbereichen liegende Abschnitt.

Hierbei ist die Absorberleitung mit der Verteilerleitung jeweils in dem Abschnitt verbunden, der zwischen den beiden Krümmungsbereichen liegt. Auf diese Weise ist sichergestellt, daß auch bei geneigt angeordneten Sonnenkollektoren, beispielsweise auf einem Schrägdach, sich keine Luft in Rohrkrümmungen fangen kann und so die Fluidströmung unterbrechen könnte.

Bei einer besonders vorteilhaften Ausgestaltung des Sonnenkollektors ist die Längsachse der Verteilerleitung in dem Abschnitt zwischen den beiden Krümmungsbereichen gegenüber der Längsachse der Absorberleitung nicht mehr als eine Strecke a in Richtung auf den Boden des Gehäuses versetzt, wobei a die Summe aus etwa 15 - 45% des Innendurchmessers der Absorberleitung und der Hälfte des Innendurchmessers der Verteilerleitung ist. Je nach Durchmesser der Absorberleitung bzw. der Verteilerleitung überschneiden sich die Rohrquerschnitte um mindestens 1 mm. Auf diese Weise wird erreicht, daß, selbst wenn der Kollektor waagerecht auf dem Dach liegt und Luft in den Rohrleitungen ist, immer noch eine geringe Fluidströmung möglich ist, die mit der Zeit die gesammelte Luft nach außen in einen Entlüftungstopf treibt. Dazu muß die eine Verteilerleitung etwas tiefer liegen als die Absorberleitung.

Weiterhin ist bei einer bevorzugten Ausgestaltung des erfindungsgemäßen Sonnenkollektors die Längsachse der Verteilerleitung in dem zwischen den beiden Krümmungsbereichen liegenden Abschnitt gegenüber der Längsachse der Verteilerleitung in den zwischen den Öffnungen in dem Gehäuse und den Krümmungsbereichen liegenden Abschnitt nicht mehr als eine Strecke b in Richtung auf den Boden des Gehäuses versetzt, wobei b etwa 60% - 95% des Innendurchmessers der Verteilerleitung ist. Auf diese Weise ist ebenfalls sichergestellt, daß sich keine Luftblasen in den Verteilerleitungen halten können. Vielmehr werden sie auch bei geringer Fluidströmung mit der Zeit nach außen in einen Entlüfungstopf gefördert.

Weitere Vorzüge und Merkmale des Erfindungsgegenstandes werden nachstehend anhand der Beschreibung von bevorzugten Ausführungsbeispielen erläutert. Es zeigen
- Fig. 1: einen Sonnenkollektor in einer schematischen Draufsicht mit abgenommenem Solarabsorber,
- Fig. 2: den Sonnenkollektor gemäß Fig. 1 in einer perspektivischen Seitenansicht in einer vergrößerten Teildarstellung mit abgenommenem Solarabsorber,
- Fig. 3: den Sonnenkollektor gemäß Fig. 2 in einer schematischen Seitenansicht mit eingesetztem Solarabsorber,
- Fig. 4: den Sonnenkollektor gemäß Fig. 3 in einer abgewandelten Ausführungsform,
- Fig. 5: eine Halteeinrichtung für die wärmeleitende Verbindung zwischen dem Solarabsorber und der Verteilerleitung in schematischer Seitenansicht in vergrößerter Darstellung, und
- Fig. 6: eine weitere Ausführungsform des Sonnenkollektors gemäß Fig. 3 in schematischer Seitenansicht.
- Fig. 7: eine weitere Ausgestaltung des Sonnenkollektors gemäß Fig. 3 mit eingesetztem Solarabsorber in schematischer Draufsicht.

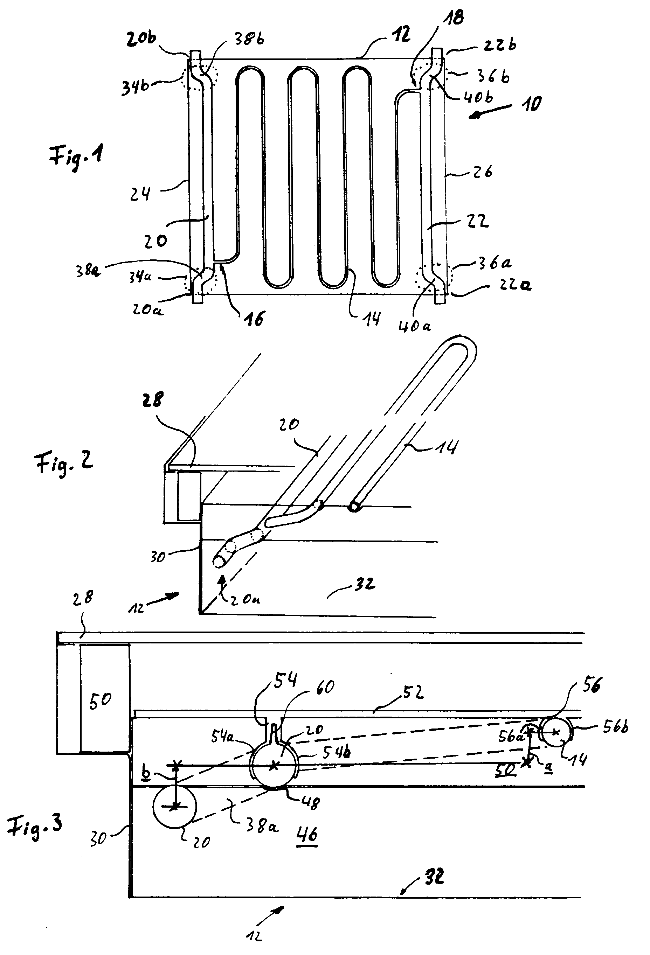

Fig. 1 zeigt einen Sonnenkollektor 10 in einer schematischen Draufsicht, wobei das Gehäuse 12 zur besseren Übersichtlichkeit teilweise entfernt ist. Im Innern des Sonnenkollektors 10 verläuft in langgezogenen Schlangenlinien eine Absorberleitung 14, die an ihren beiden Enden 16 und 18 jeweils mit einer Verteilerleitung 20, 22 verbunden ist. Die Verteilerleitungen 20, 22 sind an ihren jeweiligen beiden Enden 20a, 20b; 22a, 22b durch entsprechende Öffnungen in der Gehäusewand 12 nach außen geführt. Die Durchgänge der Verteilerleitungen 20, 22 durch die Gehäusewand 12 sind wärmeisoliert und flexibel, um Wärmebrücken zwischen den Verteilerleitungen 20, 22 und der Gehäusewand 12 zu verhindern und auch mechanische Spannungen zwischen ihnen zu vermeiden. Im Innern des Gehäuses 12 verlaufen die beiden Verteilerleitungen 20, 22 jeweils im wesentlichen parallel zu zwei einander gegenüberliegenden Seitenwänden 24, 26 des Gehäuses 12. Die Absorberleitung 18 und die beiden Verteilerleitungen 20, 22 erstrecken sich im wesentlichen parallel bzw. koplanar zu der durch eine Glasscheibe 28 (siehe Fig. 2) gebildete Sonneneinfallsfläche des Sonnenkollektors 10. Sowohl die beiden Verteilerleitungen 20, 22 als auch die Absorberleitung 14 bestehen aus einem duktilen Material, vorzugsweise Kupfer.

Wie in Fig. 2 veranschaulicht ist, ist die Seitenwand 30 des Kollektorgehäuses 12, in dem von der Glasplatte 20 entfernt liegenden Bereich nach innen zurückversetzt, so daß jeweils zwei Sonnenkollektoren an den jeweiligen oberen Bereichen der Seitenwände einander anliegend z.B. auf einem Hausdach montiert werden können, wobei im unteren Bereich ein freier Raum zwischen ihnen verbleibt. Um die Enden 20a, 20b; 22a, 22b der Verteilerleitungen 20, 22 eines Sonnenkollektors mit (nicht veranschaulichten) Verteilerleitungen und (ebenfalls nicht veranschaulichten) weiteren Sonnenkollektoren verbinden zu können, sind die Enden 20a, 20b; 22a, 22b der beiden Verteilerleitungen 20, 22 in dem unteren, zurückversetzten Bereich der Seitenwände 30 aus dem Gehäuse 12 des Sonnenkollektors 10 herausgeführt, um in dem freien Zwischenraum zwischen zwei Sonnenkollektoren die entsprechenden Verbindungsflansche montieren zu können.

Die Verteilerleitungen 20, 22 sind gegenüber der Absorberleitung 14 zur Bodenfläche 32 des Gehäuses 12 hin versetzt angeordnet, d.h. die Verteilerleitungen 20, 22 liegen tiefer in dem Gehäuse als die Absorberleitung 14. Des weiteren weist jede Verteilerleitung 20, 22 zwei Krümmungsbereiche 34a, 34b; 36a, 36b auf, in dem die Verteilerleitungen 20, 22, bezogen auf die jeweilige Mittelachse der Verteilerleitungen 20, 22, außerhalb des jeweiligen Krümmungsbereiches 34a, 34b, 36a, 36b zuerst in eine erste Richtung und daran anschließend in eine dazu entgegengesetzte Richtung gebogen sind. Wie in den Figuren veranschaulicht ist, sind die Krümmungsbereiche 34a, 34b; 36a, 36b jeweils in der Nähe der Enden 20a, 20b; 22a, 22b der jeweiligen Verteilerleitungen 20, 22 ausgebildet, d.h. sie liegen im Bereich jeweils einer Öffnung in einer Seitenwand des Gehäuses 12.

Dabei ist die Orientierung der Krümmungsbereiche so gewählt, daß (von außen gesehen) jede Verteilerleitung 20, 22 zunächst in Richtung auf die Gehäusemitte hin gebogen ist und dann die Biegung entgegengesetzt ausgerichtet ist. Dann verläuft die Verteilerleitung 20, 22 wieder geradlinig, so daß jede Verteilerleitung 20, 22 im wesentlichen parallel zu den Seitenwänden 24, 26 des Gehäuses 12 orientiert ist. Durch die beiden entgegengesetzten Biegungen in jedem Krümmungsbereich 34a, 34b; 36a, 36b ist jeweils ein quer zur Längsachse der Verteilerleitungen 20, 22 verlaufender Versatzbereich 38a, 38b; 40a, 40b ausgebildet. Durch diese Versatzbereiche können Längenänderungen der jeweiligen Verteilerleitungen 20, 22 infolge von Temperaturänderungen aufgenommen bzw. ausgeglichen werden, so daß bei einer Vielzahl von hintereinandergeschalteten Sonnenkollektoren 12 keine mechanischen Kräfte infolge von Temperaturänderungen die Gehäuse der Sonnenkollektoren gegeneinander verschieben könnten. Dabei sind die einzelnen Versatzbereiche 38a, 38b; 40a, 40b so lang und unter einem Winkel zur jeweiligen Längsachse der Verteilerleitungen 20, 22 außerhalb der jeweiligen Krümmungsbereiche 34a, 34b; 36a, 36b ausgerichtet, daß Temperaturschwankungen von etwa 200°C - 250°C, die in jedem Gehäuse 12 eines Sonnenkollektors 10 ein Längenänderung der jeweiligen Verteilerleitungen 20, 22 von etwa 4 - 5 mm hervorrufen können, ausgeglichen werden.

Wie in den Fig. 2 und 3 veranschaulicht ist, wird durch die jeweiligen Krümmungsbereiche 34a, 34b; 36a, 36b die jeweilige Verteilerleitung 20, 22 in ihrer Längsachse nicht nur seitlich versetzt, sondern auch in der Höhe. Dies bedeutet, daß die Versatzbereiche 38a, 38b; 40a, 40b schräg nach oben bzw. schräg nach unten orientiert sind, so daß jeweils ein Ende eines jeden Krümmungsbereiches gegenüber dem anderen Ende desselben Krümmungsbereiches zur Bodenfläche 32 des Gehäuses 12 hin versetzt ist. Die Steigung und die Länge der jeweiligen Versatzbereiche ist dabei so gewählt, daß die Querschnittsflächen der jeweiligen Verteilerleitungen 20, 22 vor bzw. nach dem jeweiligen Krümmungsbereich sich in der Höhe teilweise überdecken. Mit anderen Worten ist die Längsachse der Verteilerleitung in dem zwischen den Öffnungen in dem Gehäuse und dem im Krümmungsbereich liegenden Abschnitt nicht mehr als eine Strecke b in Richtung auf den Boden 32 des Gehäuses 10 versetzt, wobei b etwa 60% - 95% des Innendurchmessers der Verteilerleitungen 20, 22 ist.

Die Verteilerrohre 20, 22 sind so in dem Gehäuse 12 angeordnet, daß sie in ihrem tiefer liegenden Bereich fast vollständig in einer Isolierschicht 46, beispielsweise aus Polyurethanschaum, aufgenommen sind, während die höher liegenden Bereiche in einer kleinen Mulde 48 in der Oberfläche der Isolierschicht 46 liegen. Der höher liegende Bereich der Verteilerleitungen 20, 22 und die Absorberleitung 14 sind in einer Isolierschicht 50, beispielsweise aus Steinwolle, aufgenommen. Auf der Oberseite der Isolierschicht 50 aus Steinwolle liegt ein Solarabsorber 52 auf, der sowohl mit den Verteilerleitungen 20, 22 als auch mit der Absorberleitung 14 jeweils in wärmeleitender Verbindung 54, 56 steht.

Die Absorberleitung 14 kann mit dem Solarabsorber 52 formschlüssig, z.B. durch Löten verbunden sein, um eine gute Wärmeleitung zu haben. Da jedoch Temperaturunterschiede zwischen der Absorberleitung 14 und der Verteilerleitung 20, 22 auftreten können, muß auch an den beiden Übergangsstellen von der Verteilerleitung 20 zu der Absorberleitung 14, sowie von der Absorberleitung 14 zu der Verteilerleitung 22 eine Möglichkeit der Kompensation der Längenunterschiede vorgesehen sein.

In der Fig. 7 ist veranschaulicht, wie die Absorberleitung 14 an der Verteilerleitung 20 angeflanscht sein kann. Dabei ist die mäanderförmig an dem Solarabsorber 50 angebrachte Absorberleitung 14 nicht mit der äußersten Querleitung 68 im Bereich der Gehäusewand 12 mit der Verteilerleitung 20 verbunden, sondern in einem Bogen 74 noch ein Stück parallel zu der Verteilerleitung 20 geführt. Der Solarabsorber 50 ist hier ebenfalls mehrteilig ausgeführt, wobei die Trennfuge 70 zwischen den beiden Teilen des Solarabsorbers 50 parallel zu der Verteilerleitung 20 im Bereich der äußersten Querleitung 68 verläuft. Damit kann sich die Verteilerleitung 20 in ihrer Längsrichtung ausdehnen und die Absorberleitung 14 ist durch den Bogen 70 in der Lage, dieser Bewegung zu folgen, wie dies strich-punktiert angedeutet ist.

Der Bogen 74 ist an den beiden Enden der Absorberleitung 14 nicht mit dem Solarabsorber 50 verbunden, sondern kann Lageänderungen der Absorberleitung 14 bezüglich der Verteilerleitungen 20, 22 nachvollziehen (siehe Fig. 7). Die Länge des Bogens beträgt etwa 15% bis 45% der Länge der Absorberleitung 14.

Die Verbindung zwischen der Absorberleitung 14 und den Verteilerleitungen 20, 22 an den Enden 16, 18 der Absorberleitung 14 ist im höher liegenden Bereich der jeweiligen Verteilerleitungen 20, 22 jeweils neben einem Krümmungsbereich 34a; 36b angeordnet. Dabei ist die Anordnung so getroffen, daß die Absorberleitung 14 (bis auf die Anschlußenden 16, 18) höher, d.h. weiter entfernt vom Boden 12 des Gehäuses 10 als die Verteilerleitungen 20, 22 liegt. Auch hier überschneiden sich die Innenquerschnitte der Verteilerleitungen 20, 22 und der Absorberleitung 14 in der Höhe geringfügig. Dazu ist die Längsachse der Verteilerleitungen 20, 22 in dem Abschnitt zwischen den beiden Krümmungsbereichen 34a und 34b bzw. 36a und 36b gegenüber der Längsachse der Absorberleitung 14 nicht mehr als eine Strecke a in Richtung auf den Boden 32 des Gehäuses 12 versetzt, wobei a die Summe aus etwa 15% - 45% des Innendurchmessers der Absorberleitung und der Hälfte des Innendurchmessers der Verteilerleitungen 20, 22 ist.

Um die wärmeleitenden Verbindungen 54, 56 zwischen dem Solarabsorber 52 und den Verteilerleitungen 20, 22 bzw. der Absorberleitung 14 herzustellen, sind an dem Solarabsorber 52 Halteeinrichtungen 54, 56 angeordnet. Diese Halteeinrichtungen 54, 56 umgreifen die Absorberleitung 14 bzw. die Verteilerleitungen 20, 22 zumindest teilweise und stellen eine formschlüssige wärmeleitende Verbindung zwischen dem Solarabsorber 52 und der Absorberleitung 14 bzw. den Verteilerleitungen 20, 22 her. Dazu haben die Halteeinrichtungen 54, 56 jeweils zwei langgestreckte Haltebacken 54a, 54b bzw. 56a, 56b, die eine im Querschnitt kreisringabschnittsförmige Gestalt aufweisen, wobei sie sich jeweils etwa über ein Drittel des Rohrumfangs der Verteilerleitungen 20, 22 bzw. der Absorberleitung 14 erstrecken.

Vorzugsweise sind die Halteeinrichtungen 54, 56 so gestaltet, daß die jeweiligen Rohrleitungen in sie hineingeschnappt werden können. Da üblicherweise die Verteilerleitungen 20, 22 einen größeren Durchmesser aufweisen als die Absorberleitung 14, ist es zweckmäßig, zwischen den beiden Haltebacken 54a und 54b einen Spreizbereich 60 vorzusehen, so daß auch die Verteilerleitungen 20, 22 mit ihrem größeren Querschnitt einfach zwischen die Haltebacken 54a, 54b eingeschnappt werden können. Da die Verteilerleitungen 20, 22 in größerem Abstand von dem Solarabsorber 52 verlaufen als die Absorberleitung 14, kann der Spreizbereich 60 entsprechend hoch ausgebildet sein.

Die Verbindung zwischen den jeweiligen Halteeinrichtungen 54, 56 und den jeweiligen Rohrleitungen ist so gestaltet, daß einerseits ein guter Wärmeübergang gewährleistet ist, andererseits aber auch eine Längsbewegung der Rohrleitungen relativ zu den Halteeinrichtungen aufgrund thermischer Ausdehnung möglich ist.

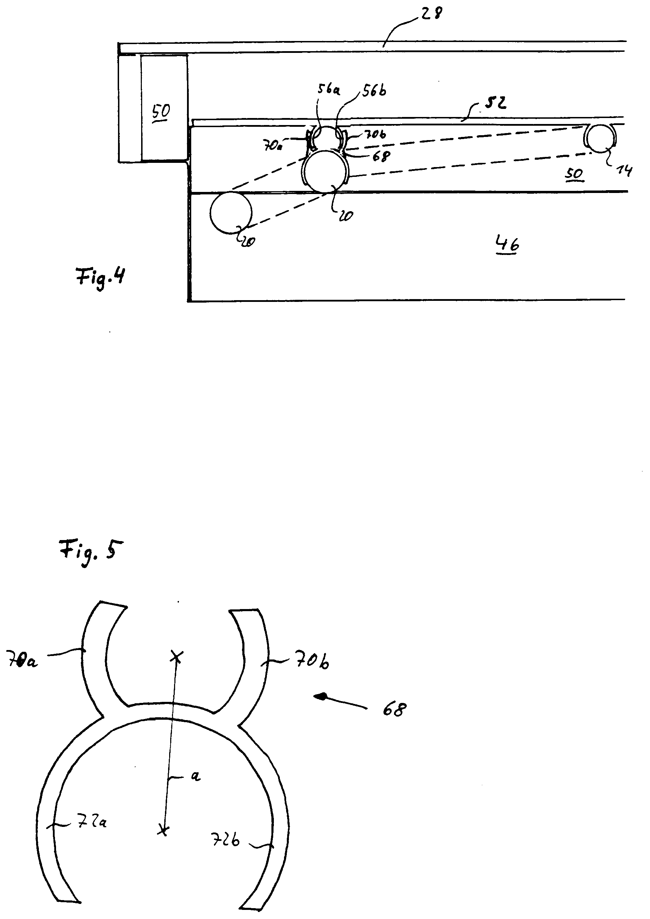

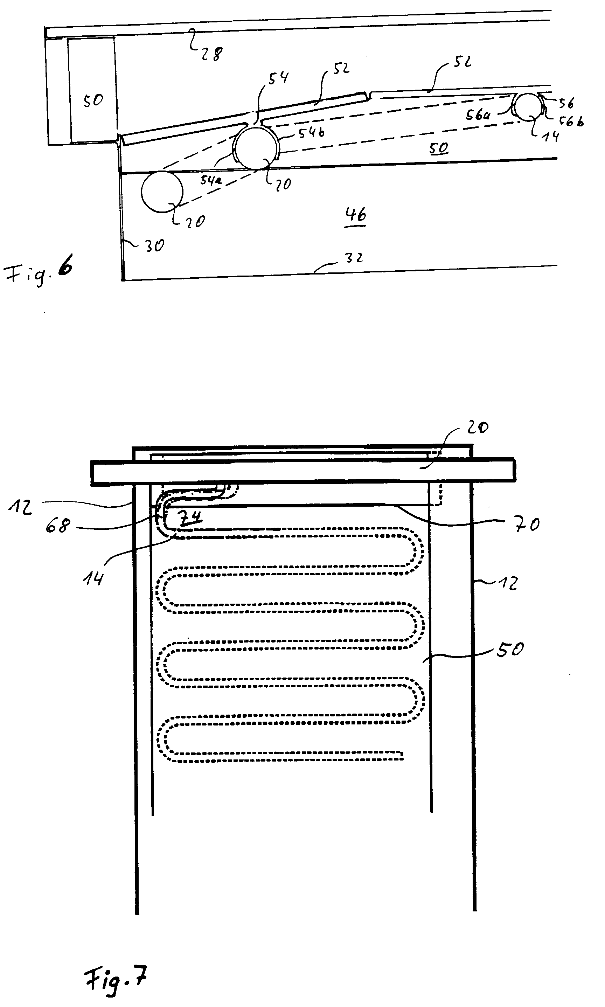

Da der Solarabsorber 52 üblicherweise als Meterware hergestellt ist, bei dem die Haltebacken 56a und 56b für die Absorberleitung 14 mit geringerem Innendurchmesser als die Verteilerleitungen 20, 22 einstückig angeformt sind, besteht auch die Möglichkeit, anstelle speziell angeformter Haltebacken 54a, 54b für die Verteilerleitungen 20, 22 eine Halteeinrichtung 68 (siehe Fig. 4 bzw. 5) vorzusehen, durch die die wärmeleitende Verbindung zwischen dem Solarabsorberteil 50 und den Verteilerleitungen 20, 22 hergestellt wird. Die Halteeinrichtung 68 hat im Querschnitt etwa die Gestalt einer Acht, wobei der obere Kreisring kleiner ist als der untere Kreisring und an beiden Kreisringen unten bzw. oben jeweils ein Segment fehlt. Von dem oberen Kreisring haben die beiden Klemmbacken 70a, 70b eine den Haltebacken 56a, 56b entsprechende Gestalt, sie sind jedoch so groß bemessen, daß sie diese von außen formschlüssig umgreifen können (siehe Fig. 4). Der untere Kreisring weist ebenfalls zwei Klemmbacken 72a, 72b auf, deren Gestalt den Haltebacken 54a, 54b entspricht, so daß die Verteilerleitung 20, 22 formschlüssig aufgenommen werden kann. Die Mittelpunkte des oberen bzw. unteren Kreisabschnitts sind um die Strecke a voneinander beabstandet. Damit wird gewährleistet, daß der Abstand der Absorberleitung 14 von den Verteilerleitungen 20, 22 in gleicher Weise eingehalten wird, wie dies bei der Ausführungsform gemäß Fig. 3 der Fall ist.

Bei einer weiteren Ausführungsform (Fig. 6) ist der Solarabsorber 52 parallel zu den Verteilerleitungen 20, 22 in wenigstens drei aneinander angrenzende Bereiche unterteilt, wobei der mittlere Bereich mit der Absorberleitung 14 und die beiden anderen Bereiche mit der jeweiligen Verteilerleitung 20, 22 verbunden sind. Dabei sind die mit den Verteilerleitungen verbundenen Bereiche gegenüber dem mit der Absorberleitung 14 verbundenen Bereich geneigt oder in Richtung auf die Bodenfläche 32 des Gehäuses 12 versetzt. Bei dieser Ausführungsform sind die Halteeinrichtungen 56 für die Verteilerleitungen 20, 22 so ausgestaltet, daß die jeweiligen Haltebacken 56a, 56b ohne den Spreizbereich 60 direkt an dem Solarabsorber angeordnet sind. In dem geneigten bzw. tiefergelegten Bereich des Solarabsorbers 52 ist die Isolierung 50 entsprechend verringert. Die beiden äußeren Teile des Solarabsorbers 50 können geringfügig kürzer als der mittlere Teil sein, um Lagenänderungen, hervorgerufen durch Längenänderungen der Verteilerleitungen 20, 22, nachvollziehen zu können, ohne daß es zu Schubbelastungen der Gehäusewände kommt.

Durch die in ihrer Höhe jeweils versetzt angeordneten Rohrbereiche der Verteilerleitungen 20, 22 bzw. des Solarabsorbers 14 wird erreicht, daß auch bei Luftblasen in dem Rohrsystem stets eine Fluidverbindung von einer Verteilerleitung 20 durch die Absorberleitung 14 zu der anderen Verteilerleitung 22 herrscht, so daß die Luftblasen allmählich durch die Strömung in dem Rohrsystem nach außen in einen Entlüftungstopf befördert werden. Dabei ist entscheidend, daß der Höhenabstand der einzelnen Abschnitte der Verbindungsleitungen bzw. des Solarabsorbers so gewählt ist, daß diese sich in ihrem Querschnitt teilweise überdecken.

## Patentansprüche

1. Sonnenkollektor (10) mit einem Gehäuse (12), in dem wenigstens eine Absorberleitung (14) aufgenommen ist, die an ihren beiden Enden (16) mit zwei, durch Öffnungen durch das Gehäuse geführten Verteilerleitungen (20, 22) aus dehn- und verformbarem Material verbunden ist, wobei die Verteilerleitungen (20, 22) im Innern des Gehäuses (12) jeweils im wesentlichen parallel zu zwei einander gegenüberliegenden Seitenwänden (24, 26) verlaufen, und die Absorberleitung (14) und die beiden Verteilerleitungen (20, 22) sich im wesentlichen parallel zu der Sonneneinfallsfläche des Sonnenkollektors (10) erstrecken und in wärmeleitender Verbindung mit einem die Sonneneinfallsfläche des Sonnenkollektors (10) im wesentlichen überdeckenden Solarabsorber stehen, wobei die Verteilerleitungen (20, 22) gegenüber der Absorberleitung (14) zur Bodenfläche (32) des Gehäuses (12) hin versetzt verlaufen, **dadurch gekennzeichnet, daß** die Verteilerleitungen (20, 22) wenigstens zwei aufeinanderfolgende Krümmungsbereiche (34a, 34b; 36a, 36b) aufweisen, in denen die Verteilerleitungen (20,22), bezogen auf die jeweilige Mittelachse der Verteilerleitungen (20, 22) außerhalb des Krümmungsbereiches (34a, 34b; 36a, 36b) in eine erste Richtung und dann in eine dazu entgegengesetzte Richtung gebogen sind.

2. Sonnenkollektor nach Anspruch 1, dadurch gekennzeichnet, daß, in jeder Verteilerleitung (20, 22) mehrere Krümmungsbereiche angeordnet sind.

3. Sonnenkollektor nach Anspruch 1 oder 2, dadurch gekennzeichnet, daß jeder Krümmungsbereich (34a, 34b; 36a, 36b) im Bereich einer Öffnung angeordnet ist.

4. Sonnenkollektor nach einem der vorhergehenden Ansprüche, dadurch gekennzeichnet, daß jeder Krümmungsbereich (34a, 34b; 36a, 36b) einen im wesentlichen quer zur Längsachse der Verteilerleitung (20, 22) verlaufenden Versatzbereich (38a, 38b, 40a, 40b) aufweist, der lang genug ist, um die Längenänderung der Verteilerleitung (20, 22) infolge von Temperaturänderungen insoweit aufzunehmen, als die Längenänderung nicht von anderen Krümmungsbereichen aufgenommen wird.

5. Sonnenkollektor nach einem der vorhergehenden Ansprüche, dadurch gekennzeichnet, daß jeder Krümmungsbereich (34a, 34b; 36a, 36b) zwei Enden aufweist, wobei jeweils ein Ende gegenüber dem anderen Ende zur Bodenfläche (32) des Gehäuses (12) hin versetzt ist.

6. Sonnenkollektor nach dem vorhergehenden Anspruch, dadurch gekennzeichnet, daß jeweils das einer Öffnung des Gehäuses (12) zugewandte Ende eines Krümmungsbereiches (34a, 34b; 36a, 36b) gegenüber dem anderen Ende zur Bodenfläche (32) des Gehäuses (12) hin versetzt ist.

7. Sonnenkollektor nach einem der vorhergehenden Ansprüche, dadurch gekennzeichnet, daß die wärmeleitende Verbindung (56) zwischen der Absorberleitung (14) und dem Solarabsorber (32) durch eine an dem Solarabsorber (52) wärmeleitend befestigte, insbesondere einstückig angeformte Halteeinrichtung herstellbar ist, die die Absorberleitung (14) zumindest teilweise formschlüssig umgreift.

8. Sonnenkollektor nach einem der vorhergehenden Ansprüche, dadurch gekennzeichnet, daß die wärmeleitende Verbindung (54) zwischen der Verteilerleitung (20, 22) und dem Solarabsorber (52) durch eine an dem Solarabsorber (52) einstückig angeformte Halteeinrichtung herstellbar ist, die die Verteilerleitung (20, 22) zumindest teilweise formschlüssig umgreift.

9. Sonnenkollektor nach einem der vorhergehenden Ansprüche, dadurch gekennzeichnet, daß die wärmeleitende Verbindung (54) zwischen der Verteilerleitung (20, 22) und dem Solarabsorber (52) durch eine an einer Halteeinrichtung (56) für eine Absorberleitung (14) befestigbare Halteeinrichtung (68) herstellbar ist, die die Verteilerleitung (20, 22) zumindest teilweise formschlüssig umgreift.

10. Sonnenkollektor nach einem der vorhergehenden Ansprüche, dadurch gekennzeichnet, daß der Solarabsorber (52) parallel zu den Verteilerleitungen (20, 22) in wenigstens drei aneinander angrenzende Bereiche geteilt ist, wobei der mittlere Bereich mit der Absorberleitung (14) und die beiden äußeren Bereiche mit den jeweiligen Verteilerleitungen (20, 22) verbunden sind, und die mit den Verteilerleitungen verbundenen Bereiche gegenüber dem mit der Absorberleitung (14) verbundenen Bereich geneigt sind.

11. Sonnenkollektor nach einem der vorhergehenden Ansprüche, dadurch gekennzeichnet, daß die beiden Krümmungsbereiche (34a, 34b; 36a, 36b) jeder Verteilerleitung (20, 22) so angeordnet und ausgerichtet sind, daß die Längsachse der Verteilerleitung (20, 22) in den zwischen den Öffnungen in dem Gehäuse (12) und den Krümmungsbereichen (34a, 34b; 36a, 36b) liegenden Abschnitten in geringerem Abstand zum Boden (32) des Gehäuses (12) liegt als der zwischen den beiden Krümmungsbereichen (34a, 34b; 36a, 36b) liegende Abschnitt.

12. Sonnenkollektor nach dem vorhergehenden Anspruch, dadurch gekennzeichnet, daß die Absorberleitung (14) mit der Verteilerleitung (20, 22) jeweils in dem Abschnitt verbunden ist, der zwischen den beiden Krümmungsbereichen (34a, 34b; 36a, 36b) liegt.

13. Sonnenkollektor nach dem vorhergehenden Anspruch, dadurch gekennzeichnet, daß die Längsachse der Verteilerleitung (20, 22) in dem Abschnitt zwischen den beiden Krümmungsbereichen (34a, 34b; 36a, 36b) gegenüber der Längsachse der Absorberleitung (14) nicht mehr als eine Strecke a in Richtung auf den Boden (32) des Gehäuses (12) versetzt ist, wobei a die Summe aus etwa 15% - 45% des Innendurchmessers der Absorberleitung (14) und der Hälfte des Innendurchmessers der Verteilerleitung (20, 22) ist.

14. Sonnenkollektor nach dem vorhergehenden Anspruch, dadurch gekennzeichnet, daß die Längsachse der Verteilerleitung (20, 22) in dem zwischen den beiden Krümmungsbereichen (34a, 34b; 36a, 36b) liegenden Abschnitt gegenüber der Längsachse der Verteilerleitung (20, 22) in den zwischen den Öffnungen in dem Gehäuse (12) und den Krümmungsbereichen (34a, 34b; 36a, 36b) liegenden Abschnitt nicht mehr als eine Strecke b in Richtung auf den Boden (32) des Gehäuses (12) versetzt ist, wobei b etwa 60% - 95% des Innendurchmessers der Verteilerleitung (20, 22) ist.
